# EUROPEAN PATENT SPECIFICATION

(11) **EP 2 581 139 B1**
(45) Date of publication and mention of the grant of the patent: **14.05.2014**
(21) Application number: 12188494.4
(22) Date of filing: 15.10.2012
(51) Int. Cl.: B05D 5/00, C09D 7/12

(54) **Surfactant composition, coating solution containing the surfactant composition, and rubber article treated by the coating solution.**
Tensidzusammensetzung, Beschichtungslösung mit der Tensidzusammensetzung und Kautschukartikel, der mit der Tensidlösung behandelt wird
Composition tensioactive, solution de revêtement contenant la composition tensioactive et article en caoutchouc traité par la solution de revêtement

(30) Priority: 14.10.2011 JP 2011226491
(43) Date of publication of application: 17.04.2013
(73) Proprietor: Nissin Chemical Industry Co., Ltd., Echizen-shi, Fukui-ken (JP); Shin-Etsu Chemical Co., Ltd., Tokyo (JP)
(72) Inventor: Mizusaki, Toru, Echizen-shi, Fukui (JP); Nakanishi, Masayuki, Echizen-shi, Fukui (JP); Arima, Shoichi, Echizen-shi, Fukui (JP); Tanii, Ichiro, Echizen-shi, Fukui (JP); Minemura, Masahiko, Annaka-shi, Gunma (JP); Ono, Ichiro, Annaka-shi, Gunma (JP)
(74) Representative: Stoner, Gerard Patrick

(56) References cited:
- US-A1- 2008 299 405
- US-A1- 2011 012 954
- CHANG, CHI-JUNG ET AL: "Effects of polymeric dispersants and surfactants on the dispersing stability and high-speed-jetting properties of aqueous-pigment-based ink-jet inks", JOURNAL OF POLYMER SCIENCE, PART B: POLYMER PHYSICS , 41(16), 1909-1920 CODEN: JPBPEM; ISSN: 0887-6266, 2003, XP002690247,
- WERSIG, R. ET AL: "Novel nonionic siloxane surfactants", APPLIED ORGANOMETALLIC CHEMISTRY , 6(8), 701-8 CODEN: AOCHEX; ISSN: 0268-2605, 1992, XP002690248,
- PAHI, ANNAMARIA B. ET AL: "Mass spectrometric characterization of the non-ionic gemini surfactant Surfynol 465 and a microcalorimetric study of its micelle formation in water", COLLOIDS AND SURFACES, A: PHYSICOCHEMICAL AND ENGINEERING ASPECTS , 345(1-3), 13-17 CODEN: CPEAEH; ISSN: 0927-7757, 2009, XP002690249,

## Description

### TECHNICAL FIELD

This invention relates to surfactant compositions, and more specifically, to surfactant compositions which desirably avoid foaming and coating inconsistency when used in coatings. This invention also relates to coating solutions containing such surfactant compositions, to their use for coating, and to articles, especially rubber articles, prepared by coating using the coating solution.

Various rubber articles are made from natural and synthetic rubbers. Exemplary such articles include surgical gloves, inspection gloves, work gloves, contraceptives, catheters, balloons, tubes, and sheet materials. They may be dipped rubber articles. This invention has special relevance to coating of rubber and rubber articles, and the description herein focuses on the coating of gloves, which are the most complicated rubber articles in terms of their application and production, although the present invention is not limited to gloves.

### BACKGROUND

Rubber gloves prepared from a natural rubber or a synthetic rubber have sticky surface, and the rubber glove often sticks to hands and fingers as well as to other parts of the rubber glove. Accordingly, handling of rubber gloves has been quite difficult, and various countermeasures have been taken to facilitate putting on and off, namely, wearability of the rubber gloves, for example, by sprinkling a powder such as talc or mica or by providing surface irregularity on the inner surface of the glove by chlorination. For example, JP-A S61-24418 discloses a rubber glove having an inner surface prepared from a synthetic resin latex containing a powder such as talc, calcium carbonate, mica, or starch. However, the glove obtained by such method had the problem that the powder came off the glove in the wearing and during use of the gloves, and use of such gloves for surgical purpose was associated with the risk of postoperative infection by the contamination of the operated lesion by the powder which had come off the gloves. The chlorine treatment had difficulty in the process control, and improvement in the wearability was insufficient. Use of chlorine also had the problem of high environmental stress.

JP-A H06-340758 proposes a method comprising coating a rubber latex containing a polymer flocculant on the rubber glove, drying the coated surface, washing the surface with water, and roughening the surface. This process, however, suffers from complicated production process.

Instead of these methods, attempts have also been made to improve the glove wearability by forming a layer containing a lubricant on the inner surface of the glove. For example, JP-B S60-6655 discloses a medical glove having formed therein a layer prepared from a carboxylated styrene-butadiene latex having starch dispersed therein, and JP-A H11-61527 discloses a rubber glove having a lubricating resin layer formed by using an aqueous dispersion containing a synthetic rubber latex which does not coagulate by the coagulant in the glove itself and an organic filler such as crosslinked polymethylmethacrylate. Improvements in the glove wearability by these methods, however, were still insufficient.

JP-B H05-13170 proposes a hydrogel coating method wherein a hydrogel polymer which is a copolymer of 2-hydroxyethylmethacrylate and methacrylic acid and/or 2-ethylhexyl acrylate is coated with a curing agent and the hydrogel is bonded to the rubber film by thermal curing. In this method, the hydrogel is coated after treating the rubber film surface with an acid or alkali in order to improve bonding between the rubber film and the hydrogel film and the coated hydrogel is cured by using a curing agent. This process is complicated, and the use of the acid or alkali requires the acid- or alkali- removal step.

To improve (reduce) stickiness of the outer surface, sprinkling of a fine powder such as talc or mica on the outer surface and chlorine treatment wherein the glove is dipped in chlorine water for reaction of the outer surface with the chlorine to form a partly cured surface have been conducted. However, these powder treatment and chlorine treatment are quite complicated, and in commercial production, this results in the increased cost.

An acetylenediol ethoxylate capped by glycidyl ether is disclosed in JP-A 2003-238472 (EP1333048A). However, its use for rubber articles is not disclosed.

### THE INVENTION

One aspect herein is to provide new and useful surfactant compositions. Another aspect is to provide new coating compositions or solutions enabling industrially advantageous production of rubber articles having non-sticky surfaces. Other aspects are methods of making and using the compositions, in particular coating on articles e.g. rubber articles, and articles, e.g. rubber articles having corresponding coatings.

The inventors of the present invention made an intensive study in order to realize the objects as described above, and developed a surfactant composition comprising (A) a glycidyl ether-capped acetylenediol ethoxylate and (B) a silicone surfactant, which can be used in a solution for coating a rubber article.

Accordingly, the present invention provides a surfactant composition comprising
(A) an acetylenediol ethoxylate capped by a glycidyl ether represented by the following structural formula (I): 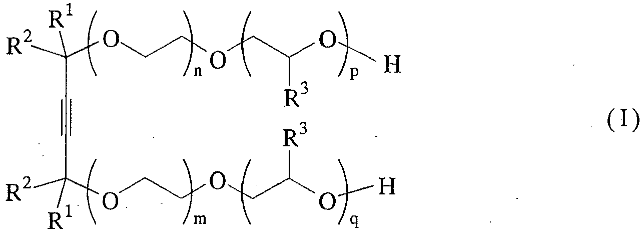 wherein R¹ is hydrogen atom, or a straight chain, branched or cyclic alkyl group containing 1 to 6 carbon atoms, R² is a straight chain, branched or cyclic alkyl group containing 1 to 12 carbon atoms, R³ is -CH₂OR⁴, R⁴ is a straight chain, branched or cyclic alkyl group, alkenyl group, aryl group, or aralkyl group containing 2 to 30 carbon atoms, n, m, p, and q are independently a positive number with the average of (n+m) being 1 to 100, and the average of (p+q) being 0.5 to 5, and
(B) a silicone surfactant.

The surfactant composition is preferably used as a coating composition for a rubber article.

In this case, the surfactant composition comprises 5 to 80% by weight of component (A) and 20 to 95% by weight of component (B).

Preferably, the glycidyl ether of the component (A) is at least one member selected from 2-ethylhexyl glycidyl ether and lauryl glycidyl ether. The silicone surfactant of the component (B) is preferably a nonionic silicone surfactant such as a polyoxyalkylene-modified silicone.

The polyoxyalkylene-modified silicone is preferably represented by the following average compositional formula (II):

R⁵ₓR⁶_{y}SiO_{(4-x-y)/2} (II)

wherein R⁵ is a substituted or unsubstituted monovalent hydrocarbon group containing 1 to 10 carbon atoms and having no aliphatic unsaturated bond; R⁶ is an organic group represented by -C_{f}H_{2f}O(C_{g}H_{2g}Oₕ)R⁷ wherein R⁷ is hydrogen atom, a substituted or unsubstituted monovalent hydrocarbon group having no aliphatic unsaturated group, or an acetyl group, f is an integer of 2 to 12, g is an integer of 2 to 4, and h is an integer of 1 to 200; and x and y are independently a positive number satisfying 0 ≤ x < 3.0, 0 < y < 3.0, and 0 < x+y ≤ 3.0.

The content of the polyoxyethylene in the polyoxyalkylene-modified silicone is preferably in the range of 30 to 80% by weight.

The surfactant composition may further comprises
(C) an ion exchanged water or a water-soluble organic solvent at an amount of up to 90 parts by weight in relation to 100 parts by weight of the total of the component (A) and the component (B).

The present invention also provides a coating solution containing the surfactant composition and a synthetic resin.

The synthetic resin preferably has a weight average molecular weight in terms of polystyrene as measured by gel permeation chromatography (GPC) of 2,000 to 500,000, and is at least one selected from the group consisting of polyvinyl alcohol, oxidized starch, etherified starch, carboxymethylcellulose, hydroxyethylcellulose, casein, gelatin, soy protein, silanol-modified polyvinyl alcohol, latex of styrene-butadiene copolymer and methylmethacrylate-butadiene copolymer, latex of acrylate and methacrylate copolymer, maleic anhydride resin, melamine resin, urea resin, polymethylmethacrylate, polyurethane, unsaturated polyester, polyvinylbutyral, and alkyd resin.

The coating solution may have a static surface tension of 20 to 32 mN/m.

The present invention further provides an article or component e.g. of rubber, having a coating film formed from the coating solution, and methods of making them by coating.

The present invention further provides such a rubber article which is used as a home, toy, sport or farm implement.

The present invention further provides a rubber article which is a surgical glove, inspection glove, work glove, contraceptive, catheter, balloon, tube or sheet.

The present invention further provides a rubber article wherein a thickness of the rubber obtained from the coating solution as described is 0.5 to 300 µm at the dry state.

We also provide a method of preparing a rubber article or coated rubber, comprising applying the above coating solution to a rubber selected from the group consisting of nitrile rubber, chloroprene rubber, ethylene propylene rubber, butyl rubber, urethane rubber, styrene butadiene rubber, butadiene rubber, isoprene rubber, acrylic rubber, carboxy-modified acrylic rubber, fluororubber, and silicone rubber, and drying the coating solution at normal temperature to 150°C for 0.5 to 5 minutes to form a film having a thickness of 0.5 to 300 µm at the dry state.

### ADVANTAGEOUS EFFECTS

The coating solution prepared by blending the surfactant composition of the present invention can be coated without inconsistency since it does not experience foaming when coated on the rubber article, and industrially advantageous production of a rubber article with non-sticky surface is thereby enabled.

### FURTHER EXPLANATIONS; OPTIONS AND PREFERENCES

The surfactant composition of the present invention contains a glycidyl ether-capped acetylenediol ethoxylate (A) and a silicone surfactant (B).

The term glycidyl ether-capped acetylenediol ethoxylate (component (A)) refers to compounds represented by the following structural formula (I), corresponding to products in which the OH terminal of an acetylenediol ethoxylate is bonded to the epoxy group moiety of a glycidyl ether, but without necessary limitation to that production process. 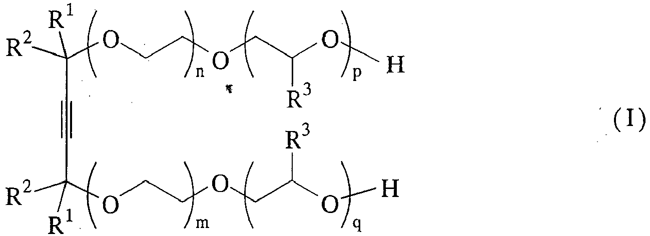 wherein R¹ is hydrogen atom, or a straight chain, branched or cyclic alkyl group containing 1 to 6 carbon atoms and preferably 3 to 5 carbon atoms, R² is a straight chain, branched or cyclic alkyl group containing 1 to 12 carbon atoms, and preferably 1 to 5 carbon atoms, R³ is -CH₂OR⁴ , R⁴ is a straight chain, branched or cyclic alkyl group, alkenyl group, aryl group, or aralkyl group containing 2 to 30 carbon atoms, and preferably 2 to 10 carbon atoms, and n, m, p, and q are independently a positive number with the average of (n+m) being 1 to 100, preferably 3 to 30, and more preferably 8 to 20, and the average of (p+q) being 0.5 to 5 and preferably 0.8 to 2.

In this case, the glycidyl ether is preferably the one represented by the following structural formulae:

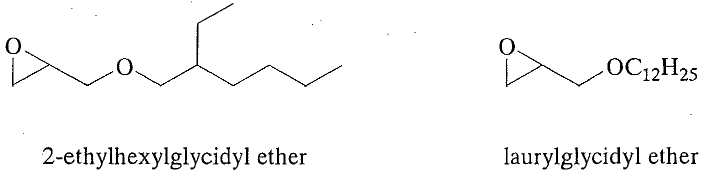

Examples of these capped ethoxylate surfactants (component (A)) include those described in JP-A 2003-238472 (EP-A-1333048) to which reference should be made.

The component (A) used for preparing the surfactant composition of the present invention is preferably used at an amount of 5 to 80% by weight, and more preferably at 7 to 60% by weight in 100% by weight of the total of the component (A) and the component (B) as described below. When used at an amount less than 5% by weight, bubbles may be formed in some coating uses, and this may cause insufficient coating due to the coating failure such as inconsistent coating. Incorporation at an amount in excess of 80% by weight may result in poor wettability, and hence, in the coating failure.

The silicone surfactant of the component (B) is preferably a nonionic silicone surfactant. Preferable examples include polyoxyalkylene-modified silicones such as those represented by the following average compositional formula (II):

R⁵ₓR⁶_{y}SiO_{(4-x-y)/2} (II)

wherein R⁵ is a substituted or unsubstituted monovalent hydrocarbon group having no unsaturated bond and containing 1 to 10 carbon atoms, preferably 1 to 8 carbon atoms; R⁶ is an organic group represented by the general formula: -C_{f}H_{2f}O(C_{g}H_{2g}Oₕ)R⁷ wherein R⁷ is hydrogen atom, a substituted or unsubstituted monovalent hydrocarbon group containing no aliphatic unsaturated group such as alkyl group containing 1 to 8 carbon atoms, and in particular, 1 to 4 carbon atom, or an acetyl group, f is an integer of 2 to 12, and in particular, 2 to 6, g is an integer of 2 to 4, and h is an integer of 1 to 200, preferably 1 to 100, and more preferably 1 to 50; and x and y are independently a positive number satisfying 0 ≤ x < 3.0, 0 < y < 3.0, and 0 < x+y ≤ 3.0, and preferably, x is 0.1 to 2, y is 0.2 to 2, and x+y is 0.3 to 3.

Content of the polyoxyethylene in the polyoxyalkylene-modified silicone is preferably 30 to 80% by weight.

Non-limiting examples of the silicone surfactant include those represented by the following structural formulae (1) to (7) :

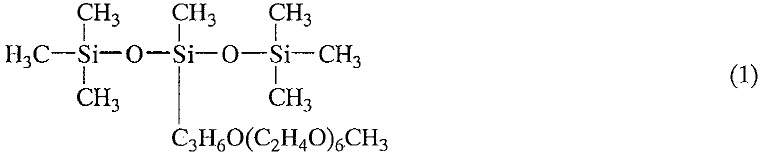

Polyoxyethylene content: 47.3% by weight

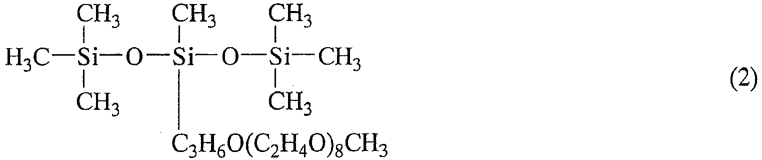

Polyoxyethylene content: 54.5% by weight

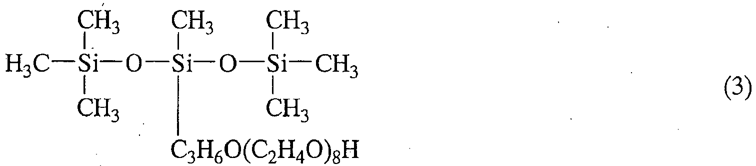

Polyoxyethylene content: 55.7% by weight

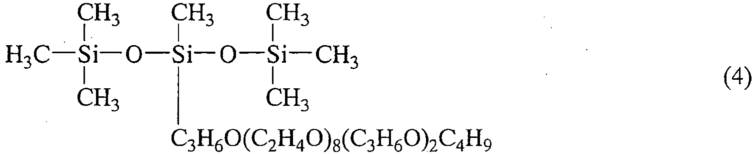

Polyoxyethylene content: 43.4% by weight

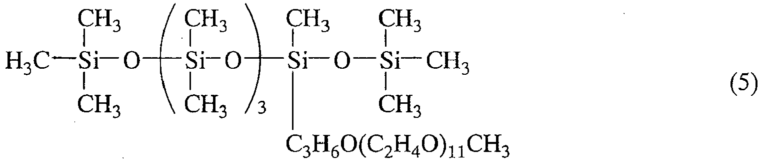

Polyoxyethylene content: 48.4% by weight

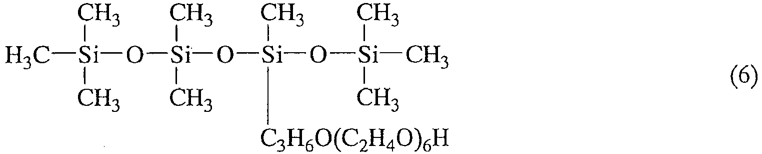

Polyoxyethylene content: 52.2% by weight

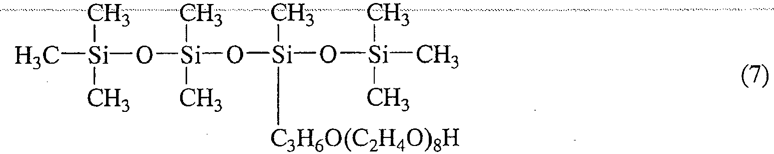

Polyoxyethylene content: 60.3% by weight

The silicone surfactants such as those above may be used alone or in combination of two or more.

The component (B) used in preparing the surfactant composition of the present invention is preferably used at an amount of 20 to 95% by weight, and more preferably at 40 to 93% by weight in 100% by weight of the total of the component (A) and the component (B). Use at an amount of less than 20% by weight may result in poor wettability, and hence coating failure in some coating uses. In excess of 95% by weight, bubbles may be formed in a coating, and this may result in the insufficient coating due to the coating failure such as inconsistent coating.

The surfactant composition of the present invention preferably comprises the component (A) and the component (B) at the total content of 100% by weight. However, the surfactant composition of the present invention may also comprise a third component (C) which may be ion exchanged water or a water-soluble organic solvent such as ethylene glycol, diethylene glycol, triethylene glycol, tetraethylene glycol, polyethylene glycol, propylene glycol, 1,3-propanediol, 1,4-butanediol, or glycerin. The component (C) may be used at up to 90 parts by weight, preferably at up to 50 parts by weight, and more preferably at up to 30 parts by weight in relation to 100 parts by weight of the total of the component (A) and the component (B) as long as the merits of the present surfactant are not impaired.

When ion exchanged (de-ionised) water or water-soluble organic solvent is added, the amount is preferably at least 5 parts by weight, especially at least 20 parts by weight per 100 parts by weight of the total of the components (A) and (B). The surfactant composition of the present invention may be obtained by mixing the components as described above by a known mixing method such as those using a propeller stirrer.

The coating solution of the present invention is prepared by blending a main resin component with the surfactant composition of the present invention. The surfactant composition may be blended so that the total of the component (A) and the component (B) is at 0.1 to 30 parts by weight per 100 parts by weight of the solid content of the main resin component. Use at less than 0.1 part by weight may result in the coating failure such as coating inconsistency due to insufficient wettability. On the other hand, use at an amount in excess of 30 parts by weight may result in the coating failure such as coating inconsistency due to insufficient solubility.

The resin which is the main component may be a natural or synthetic resin having a weight average molecular weight in terms of polystyrene as measured by gel permeation chromatography (GPC) of 2,000 to 500,000. Examples of such resin include polyvinyl alcohol, cellulose derivatives such as oxidized starch, etherified starch, carboxymethylcellulose, and hydroxyethylcellulose, casein, gelatin, soy protein, silanol-modified polyvinyl alcohol, latex of a conjugated diene such as styrene-butadiene copolymer and methylmethacrylate-butadiene copolymer, latex of an acryl copolymer such as acrylate and methacrylate copolymer, synthetic resins such as maleic anhydride resin, melamine resin, urea resin, polymethylmethacrylate, polyurethane, unsaturated polyester, polyvinylbutyral, and alkyd resin, which may be used alone or in combination of two or more and which is preferably in the form of an aqueous solution or an aqueous dispersion.

The coating solution may further comprise water, preferably ion-exchanged water, water-soluble organic solvent, filler, pH adjusting agent, antioxidant, antiseptic, curing agent, and the like. Exemplary fillers include silica, clay, and titanium oxide.

The coating solution of the present invention is preferably in the form of an aqueous solution, a solution in a water-soluble organic solvent, or a solution in a mixed solvent of water and a water-soluble organic solvent. The solid content is preferably at 0.5 to 10% by weight, and more preferably at 1 to 5% by weight. The coating solution of the present invention is obtainable by mixing the components described above by a known mixing method such as those using a propeller stirrer. In such case, the stirring is preferably conducted at a speed of at least 500 rpm, and more preferably 500 to 1,500 rpm.

The coating solution of the present invention is preferably adjusted to a static surface tension of 20 to 32 mN/m, and more preferably to 20 to 30 mN/m. The contact angle is preferably 5 to 55°, and more preferably 5 to 50°. Foaming is preferably up to 15 ml.

The coating solution is coated on the article to a thickness which depends on the type of the article. The coating solution is coated preferably to a thickness of about 0.5 to 300 µm, more preferably about 1 to 100 µm, and most preferably 5 to 50 µm at the dry state.

The coating may be accomplished by selecting a known method such as dipping, spray coating, roll coating, calendar coating, or spin coating. When dipping, the dipping time is 5 to 30 seconds.

If desired, the coated composition may be dried by heating to room temperature (15°C) to 150°C, preferably 80 to 130°C, more preferably 100 to 120°C for 0.5 to 5 minutes so that the coating of the composition is formed on the rubber.

Exemplary rubbers used for coating the coating solution of the present invention include, nitrile rubber, chloroprene rubber, ethylene propylene rubber, butyl rubber, urethane rubber, styrene butadiene rubber, butadiene rubber, isoprene rubber, acrylic rubber, carboxy-modified acrylic rubber, fluororubber, and silicone rubber, and the rubbers may be in various forms such as film, sheet, plate, spheres, and the like.

The method of preparing a rubber glove is as follows.

A metal mold having the shape (the glove shape) to be formed is immersed in coagulating agent slurry containing calcium nitrate and calcium carbonate. After drying, the metal mold thus treated is immersed in a rubber emulsion for such a sufficient time that the rubber is coagulated to form a coating layer having the desired thickness on the metal mold. The coagulated rubber layer is cured in an oven, cooled, and then immersed in the coating solution according to the present invention. The surface of the rubber layer coated with the coating solution is dried. After cooling, the rubber layer is taken off from the metal mold, and is turned inside out thereby obtaining a glove.

Alternatively, the coating solution is applied to a rubber sheet having a desired shape. Then, the rubber sheet having the layer of the coating solution applied is processed or molded to a rubber article.

The coating solution of the present invention is particularly effective for the manufacture of gloves for home, medical, and other applications. The coating solution of the present invention may also be effectively used for coating the desired portion of home, toy, sport, and farm implements and tools which are made from a rubber.

### EXAMPLES

Next, the present invention is described in further detail by referring to the following Preparation Examples, Examples, and Comparative Examples which by no means limit the scope of the present invention. In the following Preparation Examples, Examples, and Comparative Examples, parts and % are respectively parts by weight and % by weight.

### Preparation Examples

7.5 parts of acetylenediol ethoxylate capped by 2-ethylhexyl glycidyl ether which had been heated to 70°C was placed in a container equipped with a propeller stirrer, and 92.5 parts of the silicone surfactant represented by the formula (7) was gradually added with stirring. After continuously stirring the mixture for 2 hours, the mixture was cooled to room temperature. After cooling, the mixture was filtered through a filter fabric (200 mesh) to obtain a surfactant composition (hereinafter referred to as M-1).

The procedure as described above was repeated by using the composition shown in Table 1 to obtain surfactant compositions M-2 to M-14.

**Table 1**

| (pbw) | M-1 | M-2 | M-3 | M-4 | M-5 | M-6 | M-7 | M-8 | M-9 | M-10 | M-11 | M-12 | M-13 | M-14 |
|---|---|---|---|---|---|---|---|---|---|---|---|---|---|---|
| A-1 | 7.5 | 15 | 55 | 7.5 | 15 | 55 | | | 100 | | | | 44 | |
| A-2 | | | | | | | | | | 20 | 50 | | | |
| A-3 | | | | | | | | | | | | 20 | | |
| A-4 | | | | | | | | | | | | | | 7.5 |
| B-1 | 92.5 | 85 | 45 | | | | 100 | | | 80 | 50 | 80 | | 92.5 |
| B-2 | | | | 92.5 | 85 | 45 | | 100 | | | | | 36 | |
| C-1 | | | | | | | | | | | | | 20 | |

| | | | | | | | | | | | | | | |
|---|---|---|---|---|---|---|---|---|---|---|---|---|---|---|
| * (pbw) = (parts by weight) | | | | | | | | | | | | | | |

- A-1:: alkoxylene oxide addition product of 2-ethylhexyl glycidyl ether-capped 2,4,7,9-tetramethyl-5-decin-4,7-diol (represented by formula (I) with the average value of n+m of about 10 and the average value of p+q of about 2)
- A-2:: ethylene oxide addition product of 2,4,7,9-tetramethyl-5-decin-4,7-diol (molar amount of the ethylene oxide added: 3.5)
- A-3:: ethylene oxide addition product of 2,4,7,9-tetramethyl-5-decin-4,7-diol (molar amount of the ethylene oxide added: 10)
- A-4:: alcoxylene oxide addition product of lauryl glycidyl ether-capper 2,4,7,9-tetramethyl-5-decin-4,7-diol (represented by formula (I) with the average value of n+m of about 10 and the average value of p+q of about 2)

- B-1:: A silicone surfactant represented by formula (7): 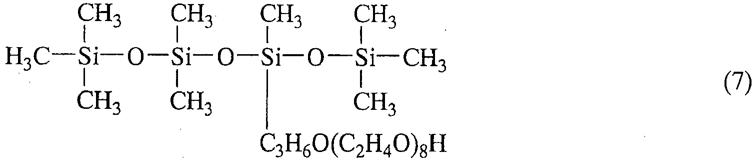
polyoxyethylene content: 60.3% by weight
- B-2:: A silicone surfactant represented by formula (4): 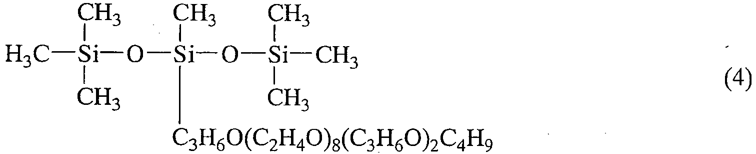 polyoxyethylene content: 43.4% by weight
C-1: ethyleneglycol

### Examples 1 to 10 and Comparative Examples 1 to 7

The surfactant composition, the polyurethane aqueous solution (solid content: 18% by weight; weight average molecular weight in terms of polystyrene measured by GPC: 10,000), and the ion exchanged water at the ratio shown in Tables 2 and 3 were placed in a container equipped with a propeller stirrer, and the mixture was stirred for 1 hour at 1,000 rpm. Physical properties were measured and the results are shown in Tables 2 and 3.

The measurement of the physical properties was conducted by the procedure as described below.

### Evaluation of the coating solution

### (1) Coating conditions

The coating solution was coated on nitrile rubber (NBR), and the coating conditions were visually evaluated by the following criteria:
- ○:: no coating inconsistency
- Δ:: slight coating inconsistency
- ×:: considerable coating consistency

### (2) Static surface tension

The static surface tension of the coating solution was measured by using surface tension meter ESB-V manufactured by Kyowa Interface Science Co., Ltd.

### (3) Contact angle

The contact angle at 30 seconds after dropping the coating solution was measured by using contact angle meter CA-D manufactured by Kyowa Interface Science Co., Ltd.

### (4) Foaming property

20 ml of the coating solution was placed in a 100 ml measuring cylinder, and shaken by using a shaker (180 cycles/min). Amount (in ml) of the foam was measured immediately after stopping the shaking and after 5 minutes.

### (5) Lubricity

A nitrile rubber glove was dipped in the coating solution, and dried at 120°C for 1 minute to prepare a test rubber glove. The grove was evaluated by the following criteria:
- ○:: the glove could be easily put on and off with no powder falling and with high lubricity
- Δ:: slightly inferior lubricity with some difficulty in putting on and off the gloves
- ×:: poor lubricity with difficulty in putting on and off the gloves

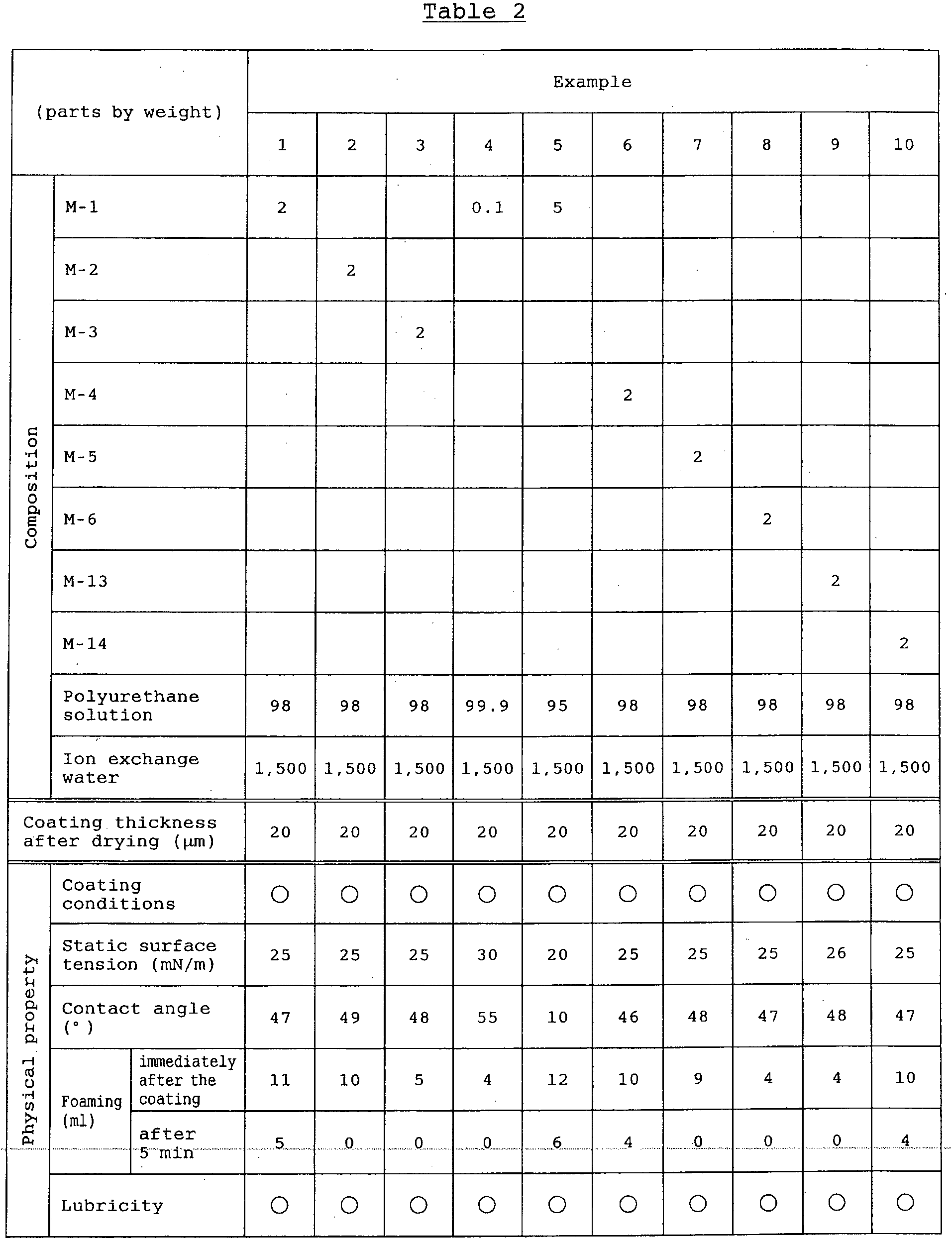

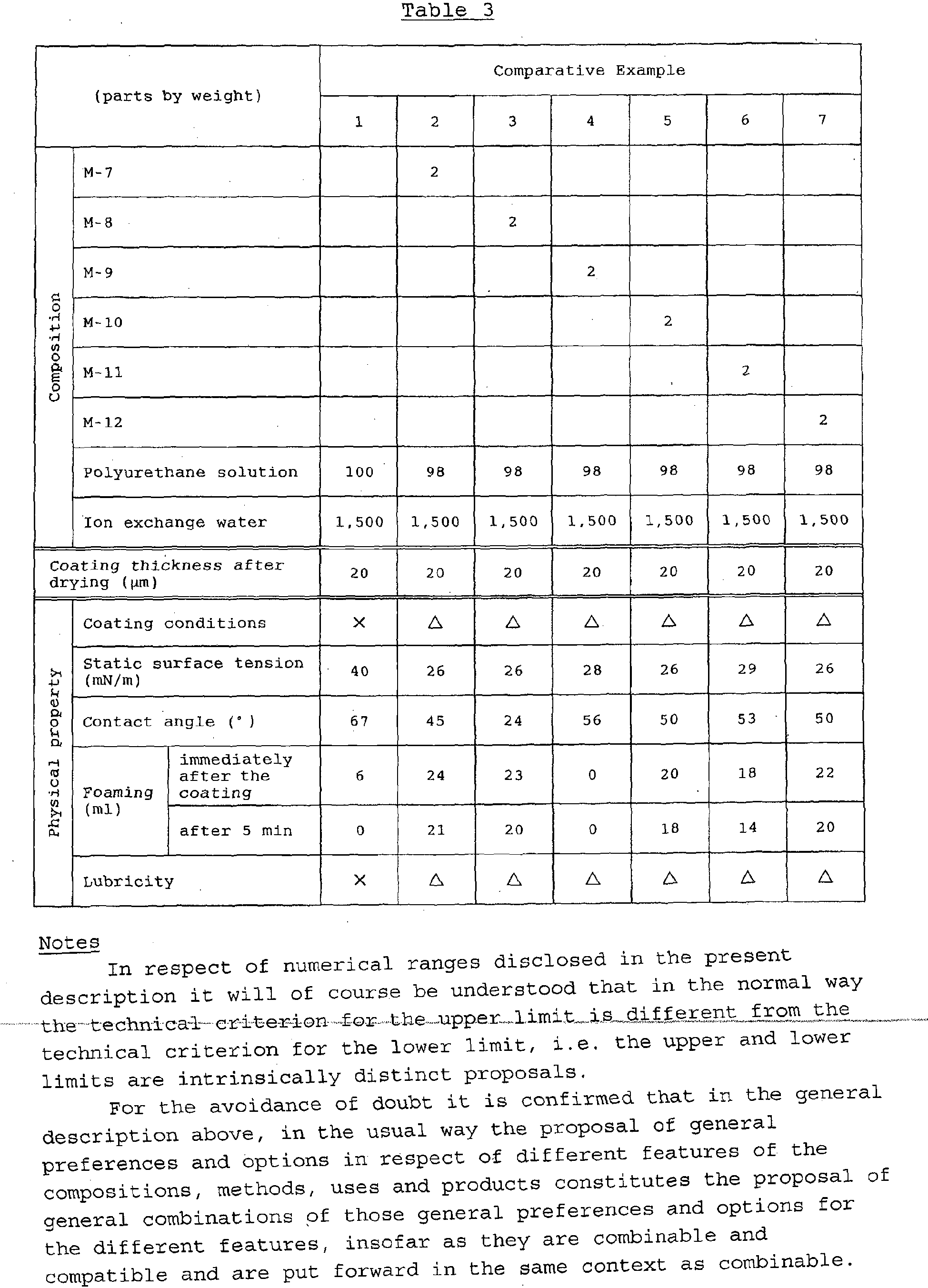

## Claims

1. A surfactant composition comprising
(A) acetylenediol ethoxylate capped by glycidyl ether, represented by the following structural formula (I): 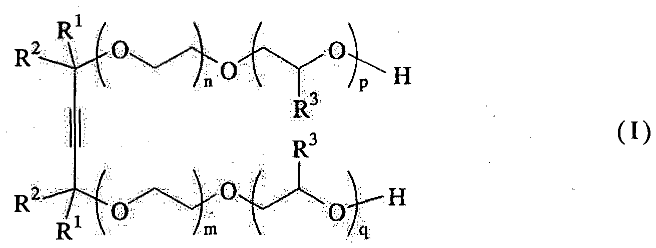 wherein R¹ are hydrogen atom, or a straight chain, branched or cyclic alkyl group containing 1 to 6 carbon atoms, R² are straight chain, branched or cyclic alkyl groups containing 1 to 12 carbon atoms, R³ is -CH₂OR⁴, R⁴ are straight chain, branched or cyclic alkyl group, alkenyl group, aryl group, or aralkyl group containing 2 to 30 carbon atoms, n, m, p, and q are independently positive numbers, the average of (n+m) being 1 to 100, and the average of (p+q) being 0.5 to 5, and
(B) a silicone surfactant.

2. A surfactant composition according to claim 1 which comprises 5 to 80% by weight of component (A) and 20 to 95% by weight of component (B).

3. A surfactant composition according to claim 1 or 2 wherein the glycidyl ether of the component (A) is at least one member selected from 2-ethylhexyl glycidyl ether and lauryl glycidyl ether.

4. A surfactant composition according to any one of claims 1 to 3 wherein the silicone surfactant of the component (B) is a nonionic silicone surfactant.

5. A surfactant composition according to claim 4 wherein the nonionic silicone surfactant is a polyoxyalkylene-modified silicone.

6. A surfactant composition according to claim 5 wherein the polyoxyalkylene-modified silicone is represented by the following average compositional formula (II) :
R⁵ₓR⁶_{y}SiO_{(4-x-y)/2} (II)
wherein R⁵ is substituted or unsubstituted monovalent hydrocarbon group containing 1 to 10 carbon atoms and having no aliphatic unsaturated bond; R⁶ is organic group represented by -C_{f}H_{2f}O(C_{g}H_{2g}Oₕ)R⁷ wherein R⁷ is hydrogen atom, a substituted or unsubstituted monovalent hydrocarbon group having no aliphatic unsaturated group, or an acetyl group, f is an integer of 2 to 12, g is an integer of 2 to 4, and h is an integer of 1 to 200; and x and y are independently a positive number satisfying 0 ≤ x < 3.0, 0 < y < 3.0, and 0 < x+y ≤ 3.0.

7. A surfactant composition according to claim 5 or 6
wherein the content of polyoxyethylene in the polyoxyalkylene-modified silicone is in the range of 30 to 80% by weight.

8. A surfactant composition according to any one of claims 1 to 7 further comprising
(C) ion-exchanged water and/or water-soluble organic solvent,at an amount of up to 90 parts by weight in relation to 100 parts by weight of the total of the component (A) and the component (B).

9. A coating solution containing a surfactant composition of any one of claim 1 to 8 and a synthetic resin.

10. A coating solution according to claim 9 wherein the synthetic resin has a weight average molecular weight in terms of polystyrene as measured by gel permeation chromatography (GPC) of 2,000 to 500,000, and is at least one selected from the group consisting of polyvinyl alcohol, oxidized starch, etherified starch, carboxymethylcellulose, hydroxyethylcellulose, casein, gelatin, soy protein, silanol-modified polyvinyl alcohol, latex of styrene-butadiene copolymer and methylmethacrylate-butadiene copolymer, latex of acrylate and methacrylate copolymer, maleic anhydride resin, melamine resin, urea resin, polymethylmethacrylate, polyurethane, unsaturated polyester, polyvinylbutyral, and alkyd resin.

11. A coating solution according to claim 9 or 10 which has a static surface tension of 20 to 32 mN/m.

12. An article, e.g. a rubber article, having a coating film formed from a coating solution of claim 9, 10 or 11.

13. A rubber article according to claim 12 which is used as a home, toy, sport or farm implement, or is a glove e.g. surgical glove, inspection glove or work glove, or a contraceptive, catheter, balloon, tube or sheet.

14. A rubber article according to claim 12 or 13 wherein a thickness of the rubber obtained from the coating solution is 0.5 to 300 µm at the dry state.

15. A method comprising forming a coating on an article from a coating composition according to claim 9, 10 or 11.

16. A method of claim 15 for preparing a rubber article, comprising applying the coating solution of claim 9, 10 or 11 to a rubber selected from the group consisting of nitrile rubber, chloroprene rubber, ethylene propylene rubber, butyl rubber, urethane rubber, styrene butadiene rubber, butadiene rubber, isoprene rubber, acrylic rubber, carboxy-modified acrylic rubber, fluororubber, and silicone rubber, and drying the coating solution at normal temperature to 150°C for 0.5 to 5 minutes to form a film having a thickness of 0.5 to 300 µm at the dry state.

## Patentansprüche

1. Tensidzusammensetzung, die Folgendes umfasst:
(A) Acetyleridiolethoxylat, verkappt mit Glycidylether, dargestellt durch die nachstehende Strukturformel (I): 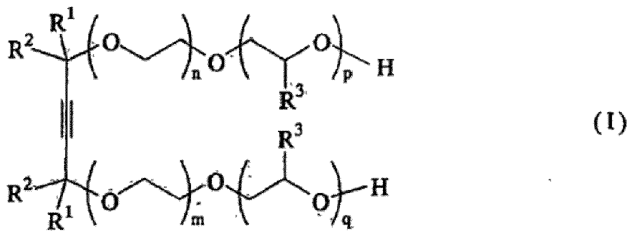 worin R¹ jeweils ein Wasserstoffatom oder eine unverzweigte, verzweigte oder zyklische Alkylgruppe ist, die 1 bis 6 Kohlenstoffatome enthält, R² jeweils eine unverzweigte, verzweigte oder zyklische Alkylgruppe ist, die 1 bis 12 Kohlenstoffatome enthält, R³ -CH₂OR⁴ ist, R⁴ jeweils eine unverzweigte, verzweigte oder zyklische Alkylgruppe, Alkenylgruppe, Arylgruppe oder Aralkylgruppe ist, die 2 bis 30 Kohlenstoffatome enthält, n, m, p und q jeweils unabhängig positive Zahlen sind, (n + m) im Mittel 1 bis 100 beträgt und (p + q) im Mittel 0,5 bis 5 beträgt, und
(B) ein Silicontensid.

2. Tensidzusammensetzung nach Anspruch 1, die 5 bis 80 Gew.-% der Komponente (A) und 20 bis 95 Gew.-% der Komponente (B) umfasst.

3. Tensidzusammensetzung nach Anspruch 1 oder 2, worin der Glycidylether der Komponente (A) zumindest ein aus 2-Ethylhexylglycidylether und Laurylglycidylether ausgewähltes Element ist.

4. Tensidzusammensetzung nach einem der Ansprüche 1 bis 3, worin das Silicontensid der Komponente (B) ein nichtionisches Silicontensid ist.

5. Tensidzusammensetzung nach Anspruch 4, worin das nichtionische Silicontensid polyoxyalkylenmodifiziertes Silicon ist.

6. Tensidzusammensetzung nach Anspruch 5, worin das polyoxyalkylenmodifizierte Silicon durch die folgende durchschnittliche Zusammensetzungsformel (II) dargestellt ist:
**R⁵ₓR⁶_{y}SiO_{(4-x-y)/2}** (II)
worin R⁵ eine substituierte oder unsubstituierte einwertige Kohlenwasserstoffgruppe, die 1 bis 10 Kohlenstoffatome enthält und keine aliphatische ungesättigte Bindung aufweist, ist; R⁶ eine durch -C_{f}H_{2f}O(C_{g}H_{2g}Oₕ)R⁷ dargestellte organische Gruppe, eine substituierte oder unsubstituierte einwertige Kohlenwasserstoffgruppe, die keine aliphatische ungesättigte Bindung aufweist, oder eine Acetylgruppe ist, f eine ganze Zahl von 2 bis 12 ist, g eine ganze Zahl von 2 bis 4 ist und h eine ganze Zahl von 1 bis 200 ist; und x und y jeweils unabhängig positive Zahlen sind, für die gilt: 0≤x<3,0,0<y<3,0 und 0<x+y≤3,0.

7. Tensidzusammensetzung nach Anspruch 5 oder 6, worin der Polyoxyethylengehalt in dem poloxyalkylenmodifizierten Silicon im Bereich von 30 bis 80 Gew.-% liegt.

8. Tensidzusammensetzung nach einem der Ansprüche 1 bis 7, die des Weiteren Folgendes umfasst:
(C) ionenausgetauschtes Wasser und/oder wasserlösliches organisches Lösungsmittel in einer Menge von bis zu 90 Gewichtsteilen, bezogen auf 100 Gewichtsteile der Summe aus Komponente (A) und Komponente (B).

9. Beschichtungslösung, die eine Tensidzusammensetzung nach einem der Ansprüche 1 bis 8 und ein Kunstharz enthält.

10. Beschichtungslösung nach Anspruch 9, worin das Kunstharz ein mittels Gelpermeationschromatographie (GPC) gemessenes gewichtsmittleres Molekulargewicht von 2.000 bis 500.000, ausgedrückt als Polystyrol, aufweist und zumindest ein aus der aus Polyvinylalkohol, oxidierter Stärke, veretherter Stärke, Carboxymethylcellulose, Hydroxyethylcellulose, Casein, Gelatine, Sojaprotein, silanolmodifiziertem Polyvinylalkohol, Latex aus Styrol-Butadien-Copolymer und Methylmethacrylat-Butadien-Compolymer, Latex aus Acrylat und Methacrylatcopolymer, Maleinsäureanhydridharz, Melaminharz, Harnstoffharz, Polymethylmethacrylat, Polyurethan, ungesättigtem Polyester, Polyvinylbutyral und Alkydharz bestehenden Gruppe ausgewähltes ist.

11. Beschichtungslösung nach Anspruch 9 oder 10, das eine statische Oberflächenspannung von 20 bis 32 mN/m aufweist.

12. Gegenstand, z.B. Kautschukgegenstand, mit einem aus einer Beschichtungslösung nach Anspruch 9, 10 oder 11 gebildeten Beschichtungsfilm.

13. Kautschukgegenstand nach Anspruch 12, der als Heim-, Spiel-, Sport- oder Hofgerät genutzt wird oder ein Handschuh, z.B. ein Operationshandschuh, ein Inspektionshandschuh oder ein Arbeitshandschuh, oder ein Verhütungsmittel, Katheter, Ballon, Schlauch oder Laken ist.

14. Kautschukgegenstand nach Anspruch 12 oder 13, worin die Dicke des aus der Beschichtungslösung entstandenen Kautschuks im trockenen Zustand 0,5 bis 300 µm beträgt.

15. Verfahren, umfassend das Ausbilden einer Beschichtung auf einem Gegenstand aus einer Beschichtungszusammensetzung nach Anspruch 9, 10 oder 11.

16. Verfahren nach Anspruch 15 zur Herstellung eines Kautschukgegenstands, umfassend das Aufbringen einer Beschichtungslösung nach Anspruch 9, 10 oder 11 auf einen aus der aus Nitrilkautschuk, Chloroprenkautschuk, Ethylenpropylenkautschuk, Butylkautschuk, Urethankautschuk, Styrolbutadienkautschuk, Butadienkautschuk, Isoprenkautschuk, Acrylkautschuk, carboxylmodifiziertem Acrylkautschuk, Fluorkautschuk und Siliconkautschuk bestehenden Gruppe ausgewählten Kautschuk und das 0,5 bis 5 min lange Trocknen der Beschichtungslösung bei Normaltemperatur bis 150 °C, um einen Film mit einer Dicke von 0,5 bis 300 µm im trockenen Zustand zu erhalten.

## Revendications

1. Composition de tensioactif comprenant
(A) un produit d'éthoxylation d'acétylènediol coiffé par un glycidyléther, représenté par la formule structurelle (I) suivante : 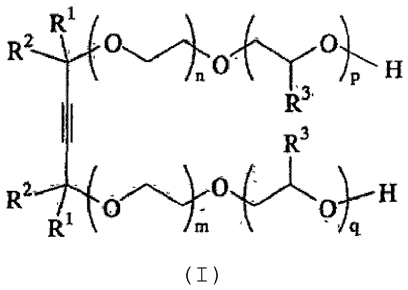 dans laquelle les R¹ sont des atomes d'hydrogène ou des groupes alkyle linéaires, ramifiés ou cycliques contenant 1 à 6 atomes de carbone, les R² sont des groupes alkyle linéaires, ramifiés ou cycliques contenant 1 à 12 atomes de carbone, R³ est -CH₂OR⁴, les R⁴ sont des groupes alkyle linéaires, ramifiés ou cycliques, alcényle, aryle, ou aralkyle, contenant 2 à 30 atomes de carbone, n, m, p et q sont indépendamment des nombres positifs, la moyenne de (n+m) valant de 1 à 100, et la moyenne de (p+q) valant de 0,5 à 5, et
(B) un tensioactif siliconé.

2. Composition de tensioactif selon la revendication 1, qui comprend 5 à 80 % en poids de composant (A) et 20 à 95 % en poids de composant (B).

3. Composition de tensioactif selon la revendication 1 ou 2, dans laquelle le glycidyléther du composant (A) est au moins un membre choisi parmi le 2-éthylhexyl-glycidyléther et le lauryl-glycidyléther.

4. Composition de tensioactif selon l'une quelconque des revendications 1 à 3, dans laquelle le tensioactif siliconé du composant (B) est un tensioactif siliconé non-ionique.

5. Composition de tensioactif selon la revendication 4, dans laquelle le tensioactif siliconé non-ionique est une silicone polyoxyalkylénée.

6. Composition de tensioactif selon la revendication 5, dans laquelle la silicone polyoxyalkylénée est représentée par la formule de composition moyenne (II) suivante :
R⁵ₓR⁶_{y}SiO_{(4-x-y)/2} (II)
dans laquelle R⁵ est un groupe hydrocarboné monovalent substitué ou non substitué contenant 1 à 10 atomes de carbone et n'ayant pas de liaison insaturée aliphatique ; R⁶ est un groupe organique représenté par -C_{f}H_{2f}O(C_{g}H_{2g}Oₕ)R⁷ où R⁷ est un atome d'hydrogène, un groupe hydrocarboné monovalent substitué ou non substitué n'ayant pas de groupe insaturé aliphatique, ou un groupe acétyle, f est un entier de 2 à 12, g est un entier de 2 à 4, et h est un entier de 1 à 200 ; et x et y sont indépendamment un entier positif satisfaisant à 0 ≤ x < 3,0, 0 < y < 3,0, et 0 < x+y ≤ 3,0.

7. Composition de tensioactif selon la revendication 5 ou 6, dans laquelle la teneur en polyoxyéthylène de la silicone polyoxyalkylénée est située dans la plage allant de 30 à 80 % en poids.

8. Composition de tensioactif selon l'une quelconque des revendications 1 à 7, comprenant en outre
(C) de l'eau ayant subi un échange d'ions et/ou un solvant organique soluble dans l'eau, en une quantité allant jusqu'à 90 parties en poids pour 100 parties en poids du total du composant (A) et du composant (B).

9. Solution de revêtement contenant une composition de tensioactif selon l'une quelconque des revendications 1 à 8 et une résine synthétique.

10. Solution de revêtement selon la revendication 9, dans laquelle la résine synthétique a une masse moléculaire moyenne en masse, en termes de polystyrène, mesurée par chromatographie par perméation sur gel (CPG), de 2 000 à 500 000, et est au moins l'une du groupe constitué par le poly(alcool vinylique), l'amidon oxydé, l'amidon éthérifié, la carboxyméthylcellulose, l'hydroxyéthylcellulose, la caséine, la gélatine, la protéine de soja, le poly(alcool vinylique) à modification silanol, un latex de copolymère de styrène-butadiène et de copolymère de méthacrylate de méthyle-butadiène, un latex de copolymère d'acrylate et de méthacrylate, la résine d'anhydride maléique, la résine de mélamine, une résine d'urée, le poly(méthacrylate de méthyle), le polyuréthane, un polyester insaturé, le poly(butyral de vinyle), et une résine alkyde.

11. Solution de revêtement selon la revendication 9 ou 10, qui a une tension de surface statique de 20 à 32 mN/m.

12. Article, par exemple article en caoutchouc, ayant un film de revêtement formé à partir d'une solution de revêtement selon la revendication 9, 10 ou 11.

13. Article en caoutchouc selon la revendication 12, qui est utilisé en tant que jouet, accessoire domestique, accessoire de sport ou outil agricole, ou qui est un gant, par exemple un gant chirurgical, un gant d'inspection ou un gant de travail, ou qui est un contraceptif, un cathéter, un ballonnet, un tube ou une feuille.

14. Article en caoutchouc selon la revendication 12 ou 13, dans lequel l'épaisseur du caoutchouc obtenu à partir de la solution de revêtement est de 0,5 à 300 µm à l'état sec.

15. Procédé comprenant la formation d'un revêtement sur un article à partir d'une composition de revêtement selon la revendication 9, 10 ou 11.

16. Procédé selon la revendication 15 pour préparer un article en caoutchouc, comprenant l'application de la solution de revêtement selon la revendication 9, 10 ou 11 à un caoutchouc choisi dans le groupe constitué par le caoutchouc de nitrile, le caoutchouc de chloroprène, le caoutchouc d'éthylène-propylène, le caoutchouc de butyle, le caoutchouc d'uréthane, le caoutchouc de styrène-butadiène, le caoutchouc de butadiène, le caoutchouc d'isoprène, le caoutchouc acrylique, le caoutchouc acrylique à modification carboxy, le caoutchouc fluoré, et le caoutchouc siliconé, et le séchage de la solution de revêtement entre la température normale et 150°C pendant 0,5 à 5 minutes pour former un film ayant une épaisseur de 0,5 à 300 µm à l'état sec.
